# EUROPEAN PATENT APPLICATION

(11) **EP 1 862 917 A2**
(43) Date of publication of application: **05.12.2007**
(21) Application number: 07010899.8
(22) Date of filing: 01.06.2007
(51) Int. Cl.: G06F 17/30

(54) **Data management**

(30) Priority: 01.06.2006 GB 0610803
(71) Applicant: Ranger, Julia, Crondall, Farnham, Surrey GU10 5QQ (GB)
(72) Inventor: Ranger, Julia, Crondall, Farnham, Surrey GU10 5QQ (GB)
(74) Representative: Downing, Michael Philip

(57) **Abstract**

A data storage and retrieval system comprises a data storage means, a processor with access to the data storage means, at least two device directories to which the processor also has access, at least two devices each with access to a respective device directory, a device data store containing a device information set including, for each device, details of a preferred format for the type of data file that is useable by that device, the processor being under the control of a program which causes It to, for each device directory, select files from the data storage means, consult the device information set for information pertaining to the device associated with the device directory concerned, convert the files to the preferred format If required, and copy them to the device directories. Selection criteria can be used to select a subset of files in the data storage for transfer to the device directories.

## Description

### FIELD OF THE INVENTION

The present invention seeks to deal with problems relating to data management - their efficient storage, retrieval and conversion.

### BACKGROUND ART

Most data management systems are directed to the needs of businesses. Documents are archived according to file structures based around business units, and arrangements are made for the efficient creation of backup copies so that business-critical information can be archived and retrieved safely and reliably.

However, information technology is increasingly being used in the home and for entertainment purposes. Personal computers (PCs) are typically delivered with DVD players, and personal digital music players (e.g. MP3 and others) have largely replaced personal cassette players and personal CD players. Such personal digital music players are typically supplied in conjunction with a cradle or cable that allows connection to a PC; software on one or both items then synchronises the file structure of the digital music player with a replica file structure on the PC. This both provides for a form of backup for the files on the digital music player and also addresses one limitation of such players, their limited file storage capacity.

Many modem digital music players are now also capable of displaying static picture and video files. A small screen is provided, allowing viewing of flies albeit at a limited resolution. Often, the synchronisation software will convert a file to the appropriate resolution, if necessary, when transferring it to the player.

This has created a situation whereby domestic users retain a large number of files in a relatively unstructured manner. Many such users are not trained in the management of IT systems and thus fail to address file storage and backup issues, preferring instead to adopt the default structure provided by equipment suppliers. Furthermore, many users are unable to understand how to transfer data from one device to another where format changes are required.

### SUMMARY OF THE INVENTION

The present invention therefore provides a data storage and retrieval system comprising a data storage means, a processor with access to the data storage means, at least two device directories to which the processor also has access, at least two devices each with access to a respective device directory, a device data store containing a device information set including, for each device, details of a preferred format for the type of data file that is useable by that device, the processor being under the control of a program which causes it to, for each device directory, select files from the data storage means, consult the device information set for information pertaining to the device associated with the device directory concerned, convert the files to the preferred format if required, and copy them to the device directories.

In general, there will be more files in the data storage means than can be accommodated in a particular device. Thus, some form of selection criteria for each device will be useful, to cause the processor to select a subset of files in the data storage means. That criterion can be as straightforward as the selection of all files of a specific type, such as only music files for a portable digital music player. Alternatively, it can be left to the user to predefine a subset. However, most users appreciate a steady change in the content of such devices, so other rules such as the selection of a subset of files according to a criteria consisting of an order in which to choose files and a maximum amount of files are likely to offer a greater degree of interest. That maximum amount of files can be defined in terms of a maximum total file size, for example. This will suit a user of a portable device having a limited file capacity. The selection order can be, for example, creation date order or "date last accessed" order.

Naturally, selection criteria can be combined and given orders of precedence. Thus, a criteria which is likely to be appreciated by many is a manual selection of specific files followed by a date-based selection up to a maximum file size.

File format conversion is a difficult and, in some terms, potentially risky process. At a trivial level, conversion of a video file to a low resolution format such as for the 320x480 pixel display of an iPod^{™}, followed by re-conversion back to a format for display on a wide screen television is evidently undesirable. A more subtle issue is that most file formats are compressed, and conversion from a lossless compression format such as tiff to a lossy compression format such as jpg can impair the quality of the data held in the file. Repeated conversion to or between lossy formats can result in a steady degradation of the data quality. Accordingly, control over the conversion process is useful to maintain the quality of the files retained in the device.

In this regard, we prefer that the program is arranged to cause the processor to transfer the converted file to the device directories, and leave the unconverted file in the data storage means. This retains an unchanged "starting point" from which future conversions can be made, avoiding the steady degradation that is associated with repeated conversion.

This approach, if pursued strictly, may result in the same conversion step being repeated time after time. This Is not an efficient use of processor time. Therefore, it may at times be preferable to adopt a master file format for use in the data storage means, the processor being caused to convert files into that format for storage there. The master file format can be an existing file format, preferably a lossless one, or can be a new format. It is preferably one that is a common target for conversion or one for which conversion to the common target formats is straightforward.

The use of the master file format might be immediate, i.e. whenever a file is first placed in the data storage means, or it might be prompted by necessity. The latter might be indicated by a file being converted to another file format a predetermined number of times, for example.

The file in the master file format might be stored instead of or together with the file in the original file format.

The device data store can be a memory, such as the memory of a computing means comprising the processor, or it can be an area of the data storage means.

The invention therefore permits the easy storage, retrieval and management of the type of file typically retained by domestic users. No specific IT management skills are required and the user does not need to become involved in the detail of the encoding formats, etc. The digital quality of the files can be retained, as opposed to the default settings of many individual systems which may slowly degrade this. Further, the user or users of the files can access them easily across platforms without needing to recall which files are held by which device.

### BRIEF DESCRIPTION OF THE DRAWINGS

An embodiment of the present invention will now be described by way of example, with reference to the accompanying figures in which;
Figure 1 illustrates examples of the variety of data sources to which the present invention can be applied;
Figure 2 shows the co-ordination of the central data store and a device directory;
Figure 3 shows ongoing synchronisation of a device directory and the central data store; and
Figure 4 shows an overall view of the system.

### DETAILED DESCRIPTION OF THE EMBODIMENTS

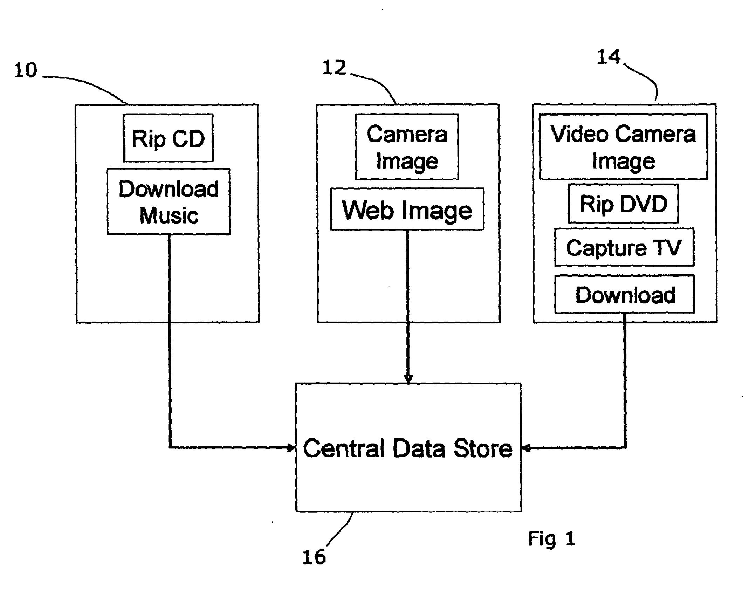

Figure 1 shows the variety of data sources that might exist in a typical home environment. This can consist of music files 10, still images 12 and/or video images 14. Music files 10 can be obtained either by extraction from a purchased CD or downloaded. Downloaded music that is subject to copyright protection maybe encoded in a specific manner that prevents repeated copying of the file, and therefore care needs to taken in the handling of such files if such copy protection and the license terms which they embody are to be respected. Still images 12 might be obtained either from a user's camera or cameras or by download, whereas video Images 14 might be obtained from video camera, from a purchased DVD, or might be captured from a television image (such as via a HDD video recorder) or may (again) be downloaded from the web.

Generally, these files will arrive in a wide variety of formats. For clarity, we will refer to the various possible music formats as M1, M2, and M3 etc, picture formats as P1, P2, and P3, and video formats as V1, V2, and V3 as it is not our intention to discuss the mechanics of specific encoding formats. However, this reflects an underlying reality that different equipment manufacturers will generally choose different formats. For example, a relatively inexpensive digital camera will usually use a compressed image file format such as jpg whereas a professional or semi-professional camera will often offer the option of capturing the raw data image for subsequent manipulation. Music is likewise available in a variety of formats, some being proprietary to particular devices and not playable on other types of devices, and others being intended as universal formats and therefore playable on all devices other than those that insist on specific proprietary formats. Video data is of its nature extremely bandwidth-Intensive, and therefore has been significant research effort in respect of improved compression algorithms. This has, in turn, produced a variety of video encoding formats as further formats become available with time.

According to the invention, all incoming images are saved in a central data store 16. The specific directory structure of this data store 16 is not of importance to the present image, and therefore the directory structure can be any that is desired. Specific sub directories could be assigned to particular file types, or to particular date ranges, or to particular users. Users could be given access to one or more directories and denied access to other directories, If security considerations require this. Likewise, the specific physical form of the central data storage is not important. It could be a single hard drive on a single computer, that computer being one member of the peer group, or one having a different position in the architecture such as a server or network-attached storage facility. Alternatively, the central data store could be a single virtual store that spans a number of hard drives, in the same computer or across several computers and/or network attached storage units.

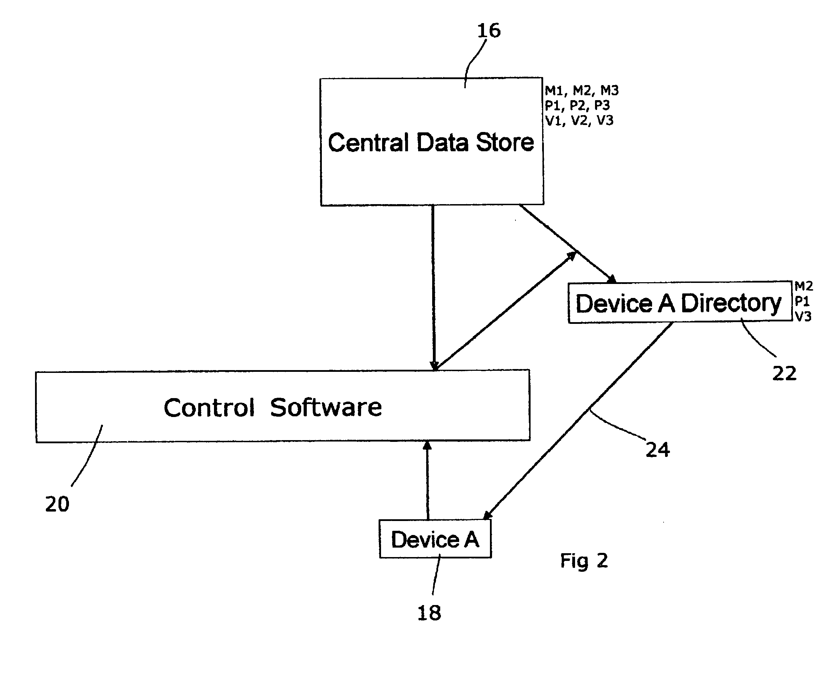

Figure 2 shows the operation of the invention in relation to a single device. A device 18 must first be introduced to the system. On connection, many devices can be recognised automatically, whilst others can be identified by requesting the user to select from a list of available devices. The control software 20 can then look up a set of device formats either from a database provided on local storage and Installed together with the control software 20 or via an on-line connection to a suitable server. If the device is new (or newer than the control software 20) or is otherwise not listed in the databases then the user can be prompted to insert the necessary information. This device information essentially lays down a default location for the device directory 22 together with a set of preferred formats for music, image, video and other files transferred to the directory.

The user will then need to specify which data is to be stored on this device. As noted above, a range for criteria can be used. All files of a specific type could be specified, such as only music files for a portable digital music player. Alternatively, specific files from the central data store 16 (or directories within the central data store 16 to which that user has access) could be selected. Alternatively, specific rules could be set up such as the most recent files up to a specified maximum total file size. Typically, the maximum total file size would correspond to the storage capacity of the device concerned. Various selection orders could be used, such as creation data order or the date of last access. Selection criteria can be combined and given orders of precedence, such as the manual selection of specific files followed by a date based selection up to a maximum total file size.

Having selected the required data, this needs to be transferred to a device directory and converted as required. The device directory will typically be on a computer to which the device can attach, such as via a cradle or suitable cable, for example. Generally, such devices are supplied with their own software that performs a suitable synchronisation between the device directory 22 and the device 18, and it is therefore sufficient to place the files in a device directory 22 in order to effect their transfer to the device 18.

The selected data in the central data store 16 can simply be copied from the data store 16 to the device directory 22, provided the format of the file held in the central data store 16 matches that which is acceptable to the device 18. Where it does not, a conversion will be necessary and this can be performed by the control software 20. Care will need to be taken to preserve the quality of the data therein, such as by retaining a copy of the data in a lossless format In the central data store 16 prior to converting to a preferred lossy format, or by always preserving the original data file. There are, by and large, two straightforward ways of doing so. One is to always retain the original file and the converted file, as shown via files M1, M2, and M3 (etc) in figure 2. However, over time, repeated file conversions for different devices will gradually increase the storage space that is required in order to retain the file in its various formats. Thus, as an alternative or If the central data store begins to approach its maximum file capacity, a preferred file storage format can be selected for each class of file. For example, in respect of image files the .tiff format has the advantages of being straightforward to convert to and from and being lossless. Files can thus be retained in the tiff format and converted to and from other formats as required. An alternative point of view is that most image files would arrive as .jpg format and can therefore safely be kept in that format. Such a rule might however be unsuitable for professional or semi-professional photographers who may wish to retain the .raw format produced by their cameras in preference to the compressed .jpg format.

Thus, the software can be provided with a series of rules as to how to decide the storage format;
1. If the unused space in the central data store is greater than 20% of the central data store total capacity then retains all files in the format originally saved together with all formats to which they have so far been converted.
2. Otherwise, if no files in the central data store are in a .raw format then retain all (image) files in .jpg format.
3. Otherwise, retain all image files in the format originally stored and convert on demand.

These rules should be user definable, for example to substitute .tiff for the .jpg preferred format if desired by the user.

Thus, when transferring files from the central data store 16 to the device directory 22, the control software will look up the acceptable file formats for the device 18, look for the correct file in the correct format In the central data store 16, and (if the matching file is found) copy this to the device directory 22. If no matching file is found then a copy of the file in a different file is located and is converted to an acceptable format. The converted format is saved to the device directory 22 and may also be saved to the central data source 16 depending on the above rule set.

In this way, a device data set is defined to each device 18 setting out the acceptable file formats for use in relation to that device, files can be selected to pre defined rules and copled to the device directory 22, arriving there in a format that is acceptable to the device 18.

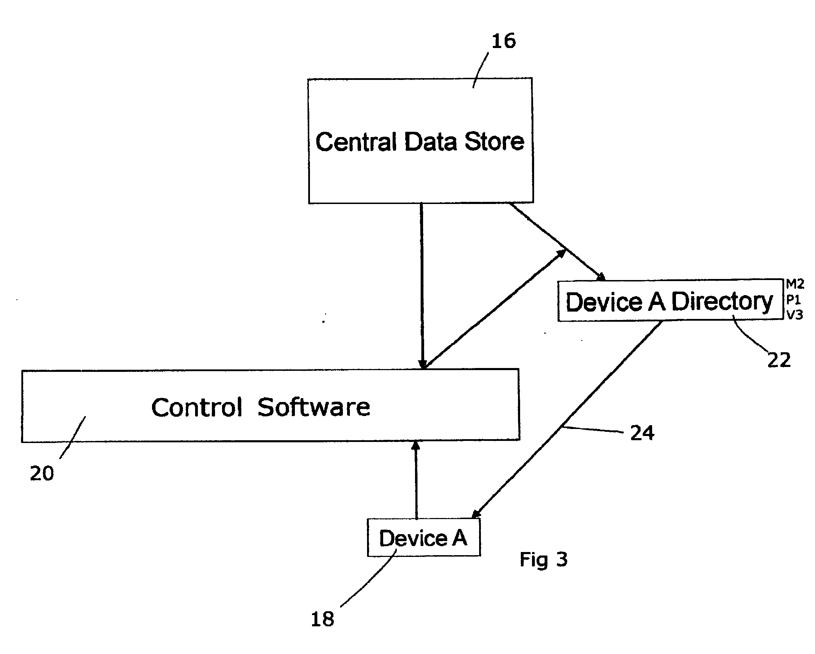

Figure 3 shows the continual process of synchronisation after the initial download device shown in figure 2. The control software 20 monitors the central data store and if a file is added to the central data store 16 (or deleted) then the file selection rules are checked if that change in the content of the central data store 16 would change these selection of files transferred to the device directory 22 then the device directory 22 would be updated as necessary. That would then cause the device 18 to be updated via its own synchronisation software when it is next connected.

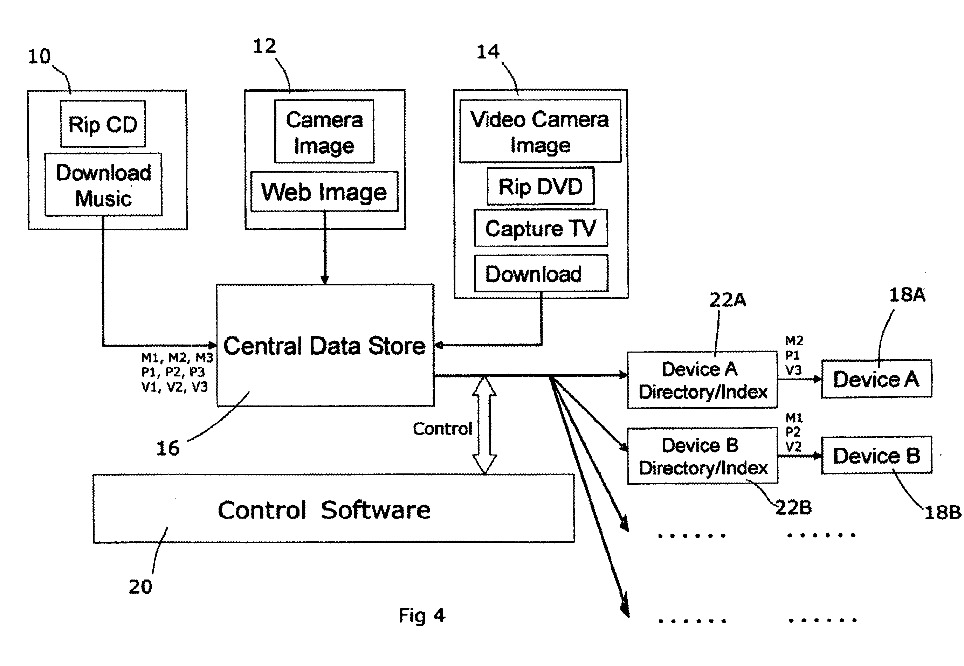

Finally, figure 4 shows the system as a whole. Various data sources 10, 12, 14 are shown, from which files are uploaded to the central data store 16. Under the guidance on the control software 20, files are selected as described above and transferred to a device directory 22A for device A and/or a device directory 22B for device B. From these device directories the files are automatically synchronised to respective devices 18A, 18B. Further devices could of course be provided, as Indicated.

It will of course be understood that many variations may be made to the above-described embodiment without departing from the scope of the present invention.

## Claims

1. A data storage and retrieval system comprising;
a data storage means
a processor with access to the data storage means;
at least two device directories to which the processor also has access;
at least two devices each with access to a respective device directory;
a device data store containing a device information set including, for each device, details of a preferred format for the type of data file that is useable by that device;
the processor being under the control of a program which causes it to, for each device directory,
select files from the data storage means,
consult the device information set for information pertaining to the device associated with the device directory concerned, convert the files to the preferred format if required, and
copy them to the device directories.

2. A data storage and retrieval system according to claim 1 in which the program is arranged to cause the processor to select a subset of files in the data storage means.

3. A data storage and retrieval system according to claim 2 in which the subset is all files of a specific type.

4. A data storage and retrieval system according to claim 2 in which the subset is predefined by a user.

5. A data storage and retrieval system according to claim 2 in which the program is arranged to cause the processor to select a subset of files according to a criteria consisting of an order in which to choose files and a maximum amount of files.

6. A data storage and retrieval system according to claim 5 in which the maximum amount of files is defined in terms of a maximum total file size.

7. A data storage and retrieval system according to claim 5 or claim 6 in which the order is based on a date associated with the file.

8. A data storage and retrieval system according to claim 7 in which the date is one of creation date and the date on which the file was last accessed.

9. A data storage and retrieval system according to any one of the preceding claims in which the program is arranged to cause the processor to transfer the converted file to the device directories and leave the unconverted file in the data storage means.

10. A data storage and retrieval system according to any one of the preceding claims in which the program is arranged to cause the processor to convert files in the data storage means to a master file format.

11. A data storage and retrieval system according to claim 10 in which the program is arranged to cause the processor to convert files in the data storage means to the master file format after that file has been converted to another file format a predetermined number of times.

12. A data storage and retrieval system according to claim 10 or claim 11 in which the program is arranged to cause the processor, after converting a file to the master file format, to store the file in the data storage means in the master file format and delete the copy of the file in the former file format.

13. A data storage and retrieval system according to claim 10 or claim 11 in which the program is arranged to cause the processor, after converting a file to the master file format, to store two copies of the file in the data storage means, being one copy in the master file format and one copy in the former file format.

14. A data storage and retrieval system according to any one of the preceding claims In which the device data store is a memory.

15. A data storage and retrieval system according to any one of claims 1 to 14 in which the device data store is an area of the data storage means.
